(19) **Europäisches Patentamt**
**European Patent Office**
**Office européen des brevets**

(11) **EP 2 937 794 B1**

(12) **EUROPEAN PATENT SPECIFICATION**

(45) Date of publication and mention
of the grant of the patent:
**17.08.2016  Bulletin 2016/33**

(51) Int Cl.:
**G06F 17/30** *(2006.01)*

(21) Application number: **14165513.4**

(22) Date of filing: **22.04.2014**

(54) **Method and system for archiving digital data**

Verfahren und System zum Archivieren von digitalen Daten

Procédé et système d'archivage de données numériques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.10.2015  Bulletin 2015/44**

(73) Proprietor: **DataVard GmbH**
**69115 Heidelberg (DE)**

(72) Inventors:
• **Zlaty, Martin**
**84105 Bratislava (SK)**

• **Lessmann, Götz**
**68239 Mannheim (DE)**

(74) Representative: **Bittner, Peter et al**
**Peter Bittner und Partner**
**Seegarten 24**
**69190 Walldorf (DE)**

(56) References cited:
**WO-A1-2007/124616      US-A1- 2009 198 729
US-A1- 2014 095 441**

# EP 2 937 794 B1

**Description**

**Technical Field**

The present invention generally relates to electronic data processing, and more particularly, relates to methods, computer program products and systems for archiving of digital data.

**Background**

Standard archiving solutions for the ever increasing amount of digital data typically use large databases for archiving historic data generated by computer systems. Current studies predict that the amount of digital data stored worldwide doubles each year. It is assumed that the amount of generated, reproduced and consumed data in the year 2020 will reach approximately 40 Zettabytes. Some of such data need to be archived, for example, for legal reasons, for business reasons or personal reasons. Especially with the advent of in-memory database technologies important data is more and more stored in volatile data storage means associated with a higher risk of data loss in case of failure. As a consequence, the risk of a loss of data can be minimized when the relevant data can be archived quickly and securely at reasonable storage cost in non-volatile storage.

The patent application US20140095441 discloses a method to archive at least a portion of data from a first processing system onto a second processing system. A query received at the first processing system is processed at the second processing system to retrieve archived data satisfying the received query in response to determining at the first processing system that the received query encompasses archived data. Various approaches are mentioned to reduce the data volume. The document addresses reducing data volume in the database management system by purging archived data from the database management system. This further reduces the index sizes and enables disk space to be reclaimed. It is further emphasized that the loading of the data from the database management system is done to guarantee that the archived data in the accelerator system is exactly what has been written to the back-up image.

**Summary**

Therefore, there is a need to improve the archiving of digital data stored in volatile storage means in that memory consumption is reduced while at the same time retrieval performance of the archived data is improved.

This technical problem is solved by a computer system, a computer implemented method and a corresponding computer program for archiving digital data as disclosed in the independent claims.

The computer system includes a database management system to operate a volatile in-memory database for storing digital data. For example, such digital data may include data records from business applications (e.g., production data, sales data, logistics data, accounting data, etc.), or may include digital image or video data digital sound data, measurement data or any other type of digitized information.

The computer system further includes an interface component which can receive a request for archiving to-be-archived data records stored in the volatile in-memory database. For example, such a request may automatically be generated by a computer system (e.g., by a batch processor which triggers a batch job for archiving data on a regular basis). The request may also be manually created by a human user of the computer system using an appropriate user interface for interacting with the computer system through the interface component. The request may specify the data to be archived and the time at which the archiving should be performed by the system.

The system further has a data archiving component for taking appropriate action in response to the request. The archiving component accesses the to-be-archived data records in the volatile in-memory database according to the request. For later retrieval of the archived data it may be advantageous to not store all the archived data in a single data packet but rather to store multiple data packets, each with a technically manageable amount of data.

For this purpose prior art solutions typically use a technical partitioning criterion corresponding to a certain size limit of the respective data partitions. For example, the stream of to-be-archived data from the in-memory database is written to sequential partitions of equal size according to the defined size limit. Data is typically archived in the order as it is stored in the in-memory database. However, this may result in high memory consumption and slow retrieval of the data in response to specific queries of a user who tries to retrieve only such data from the archived data which answer a particular query. For example, the user may be interested in retrieving the data related to the sales of a particular product during the last fiscal year. Such data can be spread over all of the equally sized partitions of the archived data.

The proposed archiving component overcomes this problem by determining a plurality of partitions for the to-be-archived data records according to at least one content based partitioning criterion which relates to at least one content portion of the to-be-archived data records. In other words, instead of technical partitioning criteria the archiving component uses content based partitioning criteria to define respective partitions of the to-be-archived data. Advantageously, a content based partitioning criterion reflects a logic according to which archived data is likely to be retrieved.

In other words, expected future data retrieval behavior determines the archiving strategy. For example, if archived data is often retrieved with regards to the fiscal year and the product group, the appropriate content based criteria for the partitioning can be the fiscal year and the product group of each data record in the-in-memory database. That is, in determining the plurality of partitions the computer system first generates semantic groups of the to-be-archive data records according to the at least one content based partitioning criterion. This can be achieved by pre-sorting the to-be-archived data records according to the corresponding field values of the to-be-archived data records, e.g., by an in-memory database application. The system can then semantically group the pre-sorted data records. For example, all data records including the fiscal year "2013" and a product group "PG1" may be grouped into a corresponding semantic group. Each semantic group can then serve as the basis for a respective partition. As a consequence, such a partition, which is formed according to the content based partitioning criteria, already includes all information about the data records which have common properties that likely will serve as search criteria for later retrieval of the archived data. One technical effect is that a respective query can be answered by retrieving data only from one respective partition, or, if nevertheless multiple partitions are used, at least from a relatively low number of partitions compared to the classic partitioning using technical partition criteria. Therefore, the retrieval performance for retrieving the archived data is improved. In one embodiment, the content based partitioning criteria may be manually defined by a user. In an alternative embodiment, the computer system may automatically derive content based partitioning criteria based on historic query data or other information (e.g., cardinality-for example, the number of distinct records belonging to a characteristic). For example, a characteristic "company code" may typically have approximately 100 records, so the cardinality of this characteristic is 100. The number of records for a characteristic "document number" may typically be approximately 1 000 000, so the cardinality is 1.000.000. Furthermore, most of the reporting accesses (~95%) address the most recent data - such as current year, compared with the previous year (e.g. what was the sales data in the past year). This data is typically not in the archive. Therefore, the archive should be able to respond fast to a respective query with a response that no archived data is relevant for the current year. This can be achieved by means of indices, filtering out partitions from the archive, when data from the current year is being accessed.

Forming semantic groups of the to-be-archived data can serve as a basis for improved system performance when retrieving the archived data. To further reduce memory consumption of the archived data the archiving component compresses the to-be-archived data records for each determined partition. For example, dictionary based compression algorithms such as the LZH - Liv Zempel algorithm with Huffman coding or the Lempel-Ziv-Welch-Algorithm or any derivative of such algorithms may be used. Such compression algorithms can achieve data compression ratios of up to 95%. In other words, the archiving component compresses each determined partition into a binary object.

The compressed partitions can then be stored in persistent data storage means. Such persistent storage means are implemented by a non-volatile memory component, such as for example storage means like hard disks, optical storage means, SSD, etc. In one embodiment, the persistent data storage means can be part of the same database management system as the system that manages the in-memory database. For example, SAP HANA provides such a hybrid database management system which controls a column based in-memory database and at the same time a persistent database. The compressed binary objects may still be large objects. For such large binary objects (also called binary large objects BLOB) a traditional persistent database, such as for example a relational database may not be suitable as a storage location. Therefore, the persistent storage means may include a file system configured to store the compressed determined partitions as binary objects. The file system is capable to store BLOs. In addition, for efficient retrieval of the BLOBs from the file system, the persistent data storage means may further include a database structure for storing references to each compressed determined partition, that is, to each BLOB. In this embodiment, the references in the database structure may be administrated by the database management system and point to the respective BLOBs in the file system.

The archiving component is configured to further improve the archived data regarding performance gains for the subsequent retrieval of the archived compressed data. Although, as explained earlier, the forming of partitions (semantic groups) according to content based criteria is already advantageous in this respect, the compressed data is intransparent regarding the content of the archived data. Therefore, the compressed archive data format requires the archiving component to perform a stepwise retrieval of the respective partitions until the right partition which satisfies a particular retrieval is found. To overcome this problem, the archiving component generates an index for each compressed determined partition in the persistent data storage means. The index indicates a range for the at least one content based partitioning criterion wherein the range is representative of the compressed data records included in each respective stored partition. For example, if a partition of compressed data sets was formed on the basis of a sematic group where the fiscal year is "2013" and the product groups reach from "PG1" to PG3", then the index can be exactly composed of those content based criteria indicating that the data records in the compressed partition all belong to said fiscal year and product groups. If only one product group would be included the respective index would include this one product group. For any content based partitioning criterion the index may include a single value or a range of values being indicative for the underlying data records. Storing this index in a persistent database structure with each index entry pointing directly to the BLOB which includes the respective compressed data records allows the archiving component to better prepare the compressed data sets for fast retrieval because the archiving component can immediately retrieve all relevant compressed partitions satisfying a particular query with selection criteria matching the index composition.

Further performance gains can be based on the following embodiment. The archiving component may determine the plurality of partitions by using a predefined partition size threshold. In this embodiment a particular partition is determined when the size of this particular partition exceeds the predefined partition size threshold.

In other words, as long as the uncompressed data volume of an identified semantic group is smaller or equal than the partition size threshold the archiving component does not create a partition but goes to the next semantic group. The uncompressed data volume may be determined as the size of one data row (e.g., 1 000 bytes) times the number of data rows (e.g., 100000). One goal may be to ensure a good target compression ratio, which can be achieved in case of a high probability of reoccurring data patterns - the more data, the higher this probability and the better the compression ratio. Only when the aggregate data amount of the semantic groups is now larger than the partition size threshold a new partition will be formed. Otherwise, the next semantic group is considered. In general, it may be advantageous that the partitions are not too small, so that a good compression ratio can be achieved and, at the same time, are not too big so that the memory consumption is not too big during the processing of the data. In general, the last semantic group results in a package, which does not reach the partition size threshold. However, although the compression of this object might not be very good it may be negligible with regards to full size of the archived data.

The previous embodiments illustrate how the computer system can improve archiving regarding a reduction of memory consumption and gains in the system performance. However, the compressed data records may be decompressed by unauthorized attackers. For example, in the case of using dictionary based compression algorithms which are very efficient in terms of the compression ratio it can be easy to decompress the data because the respective decompression algorithms can automatically rebuild the dictionary which was used for the compression of the data records. Therefore, it is desirable to further improve the archiving component in that binary objects are protected, so that unauthorized access to the original data records (retrieved from the binary objects) is not possible. Possible requirements for the encryption can be: the encryption key should be easy to generate, the solution should be operable offline, and the performance should not be affected since the data can be accessed quite often and the decryption time should be negligible. To ensure the performance aspect, it may be advantageous to apply encryption not to the entire compressed data (possibly gigabytes of data), but only to a subset of the compressed data. Therefore, the data archiving component uses a dictionary based compression algorithm to compress the to-be-archived data records and the only encrypts an initial portion of the compressed data records. This initial portion of the compressed data records was used for the initial portion of the dictionary during data compression. In other words, in dictionary based compression the biggest part of the respective dictionary is built at the beginning of the compression process because in the beginning the most new symbols for the dictionary are created. Towards the end of the compression most symbols are already in the dictionary and only from time to time a new one gets added. As a consequence, by encrypting only an initial portion of the compressed data records the size of the archived data is hardly increased but at the same time the biggest part of the dictionary which is built during the decompression of the data based on the encrypted initial portion is without any value for the decompression of the remaining larger part of the unencrypted compressed data. The technical effect is high data security while still maintaining a high degree of data compression and good decryption performance, which is substantially independent from the size of the archived data.

There is a trade-off between the performance of the system and the size of the archived data on the one hand and the security of the data on the other hand. By using the size of the initial portion as a variable control parameter of the archiving system component, the user can tune the archiving system in this respect according to user preferences. For example, less sensitive data can be encrypted by using a smaller initial portion for encryption than highly sensitive data. In turn, the performance and compression ratio is better for the less sensitive data than for the highly sensitive data. The data archiving component uses a maximum safety HEXOR (Header Encryption using XOR) encryption algorithm to encrypt the initial portion of the compressed data records. The HEXOR algorithm uses bit-wise XOR encryption for the initial portion, where the encryption key is a random sequence of bytes with the size of the initial portion. Bitwise XOR encryption makes the result also a random sequence, where each bit has the same probability to have a value 0 or 1. Therefore, decryption without the encryption key becomes impossible because having the initial portion does not give any additional information.

Finally, after the archiving of the to-be-archived data according to the above described embodiments, the archiving component can also be used for data retrieval. For example, the archiving component can receive a read request for original data archived in the persistent data storage means. The read request may be triggered by a user and specifies at least one particular content based partitioning criterion as search criterion for the archived compressed data sets. The archiving component can retrieve from the persistent data storage means a specific compressed partition matching the at least one particular content based partitioning criterion. More details are disclosed in the detailed description. Then, the retrieved compressed partition is decompressed resulting in the requested original data and finally the original data is provided to the volatile in-memory database for presentation.

In further embodiments, a computer program product when loaded into a memory of the computer system and executed by at least one processor of the computer system causes the computer system to execute the steps of a respective computer implemented method for performing the above described functions of the computer system.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

**Brief Description of the Drawings**

FIG. 1 is a simplified block diagram of a computer system for archiving according to an embodiment of the invention;
FIG. 2 illustrates data partitioning details according to an embodiment of the invention;
FIG. 3 shows index creation according to an embodiment of the invention;
FIG. 4 illustrates partitioning with semantic groups according to an embodiment of then invention;
FIG. 5 illustrates encryption of compressed data according to an embodiment of the invention;
FIG. 6 illustrates security tuning according to an embodiment of the invention;
FIG. 7 shows details of an encryption approach according to an embodiment of the invention;
FIG. 8 is a simplified flowchart of a computer implemented method according to an embodiment of the invention.

**Detailed Description**

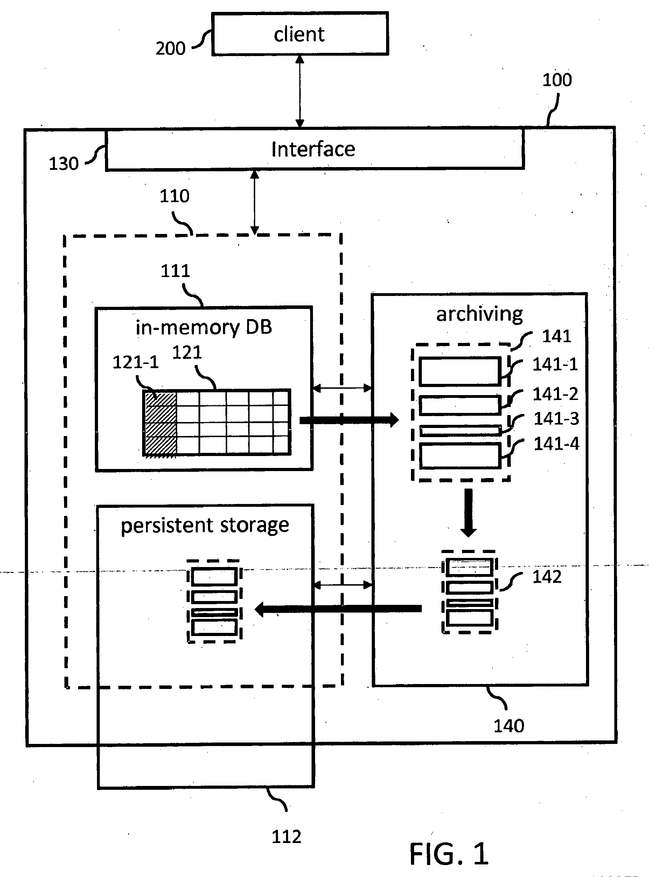

FIG. 1 shows a simplified block diagram of a computer system 100 for archiving according to an embodiment of the invention. Data is archived from a volatile database 111 to a persistent storage 112, and - optionally - data is de-archived or retrieved in the opposite direction. The computer system 100 includes a database management system 110 to operate a volatile in-memory database111 for storing digital data. For example, such digital data may include data records from business applications (e.g., production data, sales data, logistics data, accounting data, etc.), or may include digital image or video data, digital sound data, measurement data or any other type of digitized information. An example of a commercially available in-memory database 111 is SAP HANA which is a database stored in the main memory of a computer system (e.g., a server computer). Any other in-memory database or relational database may be used within the contexts of this invention. The in-memory database 111 has an internal interface which allows archiving and reloading data. In the example of SAP HANA this internal interface is called SAP NearLine Storage (NLS) interface.

The computer system further includes an interface component 130 which can receive a request for archiving to-be-archived data records 121 stored in the volatile in-memory database 111. For example, a user of the archiving system may send such a request by using a client computer 200 which is communicatively coupled with the computer system 100. The client computer 200 can have standard input/output devices allowing the user to interact with the archiving system 100 and when. For example, the user may specify a request through an appropriate graphical user interface indicating which data are to be archived by the archiving system. For example, the request may relate to data associated with a range of particular product families and the last fiscal year. Alternatively, such a request may automatically be generated by a computer system. For example, archiving batches may be planned in advance and a corresponding request is triggered when certain criteria are met (e.g., perform an archiving run on the data of the previous months on the first day of the current month).

The system further has a data archiving component 140 for taking appropriate action in response to the request. The archiving component 140 accesses the to-be-archived data records 121 in the volatile in-memory database 111 via the internal interface (e.g., SAP NearLine Storage (NLS) interface) according to the request. Then, the archiving component 140 determines a plurality of partitions for the to-be-archived data records 121 according to at least one content based partitioning criterion which relates to at least one content portion 121-1 of the to-be-archived data records 121. That is, instead of technical partitioning criteria the archiving component uses content based partitioning criteria to define respective partitions 141-1 to 141-4 of the to-be-archived data 121. A content based partitioning criterion is a criterion that relates to the content of the data in the in-memory data base rather than to technical properties of the system. Examples for content based criteria are: a particular fiscal year or a range of fiscal years (or any other interesting time period such as quarters), a particular product group or a range of product groups, a particular business unit or a range of business units or any other suitable field of the data records which can be used as meaningful semantic grouping criterion for the data records.

Advantageously, a content based partitioning criterion reflects a logic according to which archived data is likely to be retrieved. For example, if archived data is often retrieved with regards to the fiscal year and the product group, the appropriate content based criteria for the partitioning can be the fiscal year and the product group of each data record in the-in-memory database. Depending on the application scenario any other content based partition criterion or any combination of content based partitioning criteria may be used. The response time to a query for retrieving archived data can be shortened if the archived data is grouped according to the query parameters. Therefore, in one embodiment, the content based partitioning criteria may be received from a user based on the experience which combinations of content based criteria were queried most often in the past. In an alternative embodiment, the computer system may automatically derive content based partitioning criteria based on historic query data or other data by using appropriate statistical methods (e.g., archiving history, cardinality).

The archiving component 140 can read the respective data from the in-memory database 111. However, the processing is performed in memory on a server which is typically limited to the order of gigabytes, even though, possibly terabytes of data can be stored in the persistent database 112. Future storage technology may support higher orders of magnitude in storage space. Advantageously, the archiving component ensures that an optimized size of memory is used which is usually much less than the size of the archived data. Thereby, different reading modes may be used to read data from the volatile database 111, i.e., P-package reading, W-high aggregation reading, L-load reading. Each reading mode can be optimized for the maximum speed in the reading process. When reading the data, the system may perform a selection of data by filtering out data records according to a particular filtering clause (e.g., filter out year 2012). It may perform a projection by assigning fields to a target structure and choose only fields which are requested in the received request. It may perform an aggregation by aggregating result lines into the output. For example, sum(amount) aggregates all fields with the same characteristics by computing the sum of the respective amounts.

The P-mode may be used when archived data is to be returned without aggregation in the same format as it was archived. This is typically done in the verification phase of archiving when to-be-archived data is written into the respective data storage and it is verified if the data is written correctly. In this case, only projection (selection of a subset of fields from structured data) and selection (filtering) may be done (if required). The data is returned package by package. Maximum memory consumption corresponds to the size of currently processed compressed data in addition to the size of the uncompressed data.

The W-mode is a high aggregation mode used in reporting or data querying where archived data is to be accessed. In reporting the data is displayed to the user. Therefore, it may be advantageous to return only a limited number of data records which is below a threshold which can me reasonably consumed by the user. For example, returning more than 50000 records may result in the user's incapability to reasonably scan the results. In real practice, the result size is often less than 1000 records and it is assumed that this result size can be stored in a memory portion (e.g., memory of an application server, not shown) used to run the archiving component 140. The memory portion to run the archiving component also stores the partitions created by the archiving component and is typically in the order of several Gigabytes. However, the size of this memory portion may be larger or smaller without any impact on the conceptual approach as disclosed in this document. Memory usage corresponds to the size of the currently compressed data in addition to the size of the uncompressed data plus the output result size (e.g., limited to max 50000 records).

The L-mode can be used for loading, where low aggregation is expected. Data is processed package by package, with project, aggregation and filtering. Complete aggregation, between packages cannot be assured due to a possible lack of memory.

The to-be-archived data is sorted according to the at least one content based partitioning criterion. As a result, sematic groups can be identified where all to-be-archived data records matching a particular combination of content based partitioning criteria are included. For example, all data records including the fiscal year "2013" and a product group "PG1" may be grouped into a corresponding semantic group. An identified semantic group may serve as a basis for an archiving partition 141-1 to 141-4. An archiving partition may also include multiple semantic groups. In other words, once the to-be-archived data 121 is semantically grouped the archiving component 140 can determine a plurality of partitions 141 based on the identified semantic groups.

To reduce disk (persistent memory) consumption of the archived data the archiving component can then compress the to-be-archived data records for each determined partition 141-1 to 141-4. Dictionary based compression algorithms such as the LZH - Liv Zempel algorithm with Huffman coding or the Lempel-Ziv-Welch-Algorithm or any derivative of such algorithms may be used to achieve data compression ratios of up to 95%. Other appropriate compression algorithms, such as for example the DEFLATE or LZR algorithms can be used as well. Thereby, the archiving component 140 generates a compressed binary object for each determined partition 141-1 to 141-4, respectively.

The compressed determined partitions 142 can then be stored in persistent data storage means 112. Such persistent storage means 112 are implemented by a non-volatile memory component, such as for example storage means like hard disks, optical storage means, SSD, etc. In FIG. 1 the frame which illustrates the persistent storage means 112 has an intersection with the database management system 110 and with the archiving system 100 but it also extends beyond the system boundary of system 100. This is meant to illustrate that optionally the persistent storage means 112 can be an integral part of the same data management system 110 which is used for managing the in-memory database 110. Optionally it may be implemented as a second persistent database or a file system within the archiving system but using a different data management system or it may be implemented completely outside or remote from the archiving system 100 to which it is communicatively coupled for being able to perform the required exchange of data with the archiving system 100. For example, SAP HANA supports the first setup by offering an in-memory data base and a persistent database under the same database management system. The persistent storage means may include a file system configured to store the compressed determined partitions as binary objects. It can be advantageous to use persistent data storage means which use the same database management system as the in-memory database because system complexity and hardware resource requirements are reduced.

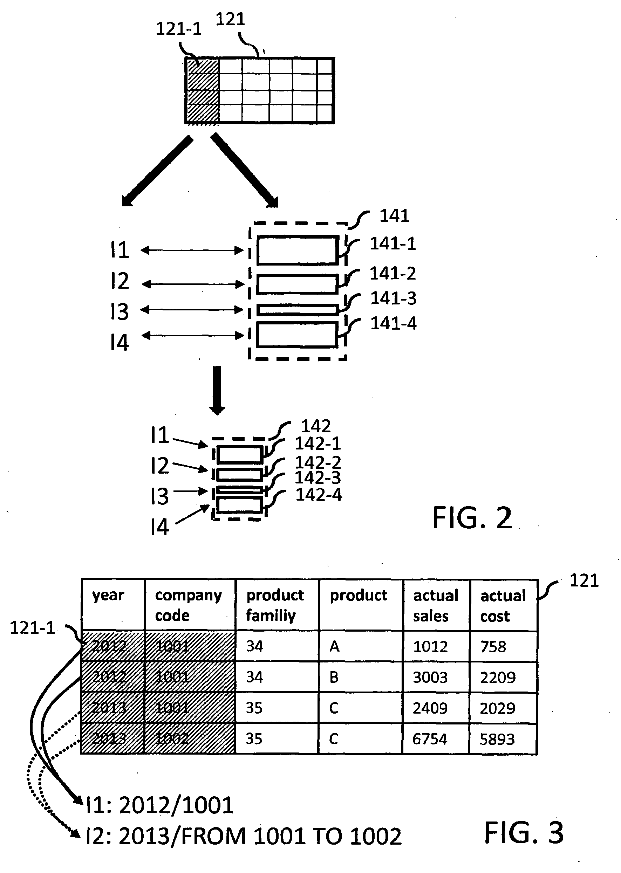

FIG. 2 illustrates data partitioning details according to an embodiment of the invention. In one embodiment, the archiving component is further improves the archived data regarding performance gains for the subsequent retrieval of the archived compressed data. As described with FIG. 1, the archiving component compresses the determined partitions to reduce memory consumption. However compressed partitions 142 include binary data being completely intransparent regarding the content of the archived data. In other words, compression removes transparency from the partitions. To deal with this constraint, prior to compression, the archiving component can generate an index I1 to I4 for each compressed determined partition 142-1 to 142-4 in the persistent data storage means. Advantageously this index is generated to indicate a range for the at least one content based partitioning criterion 121-1 wherein the range is representative of the compressed data records 142-1 to 142-4 included in each respective stored partition.

FIG. 3 shows by way of example index creation according to an embodiment of the invention. In the example, the to-be archived data 121 include data records with the fields year, company code, product family, product, actual sales, actual cost. It is assumed that for each product there are actual sales and actual cost figures available. Each product belongs to a product family and each company represented by the company code is responsible for a certain group of product families. That is, the table 121 allows tracking the sales performance of each company for each product group and drill down to the individual product level on yearly basis. Further it is assumed that archived data is mostly to be retrieved by year and company code. That is, the analysis query to retrieve the archived data is often based on such content based criteria at an aggregate level summarizing the figures across products and product groups. As a consequence, the archiving component can use the combination of the content of the fields year and company code as the content based partitioning criteria. In other words, the archiving component will determine the partitions according to the sematic groups which can be formed based on such criteria. For example, a first semantic group is related to data records for the content combination 2012/1001. A second semantic group is related to the content combination 2013/1001 and the third one to the content combination 2013/1002. The index I1 to I4 can be composed of those content based criteria indicating that the data records in the compressed partition all belong to said combinations. In the example, the first index I1 is created for the partition 2012/1001 and is named accordingly. The second index I2 is a cross-group index created for the aggregate of the second and the third semantic group. This may be the case when too few data records are included in one semantic group to form a partition on its own. In the example it is assumed that the second and the third semantic group are packed into a second partition for which the respective index I2 is generated. The index is generated to indicate the full range of data records included in the second partition. For example, this can be achieved by using FROM TO (like in the example) or BETWEEN syntax elements in the index to make the index indicative for the underlying data records. The index is then stored in the persistent database structure and each index entry I1 to I4 points directly to the respective binary object (compressed partitions 142-1 to 142-4). The generated index allows the archiving component to better prepare the compressed data sets for fast retrieval because the archiving component can immediately retrieve all relevant compressed partitions satisfying a particular query with selection criteria matching the index composition.

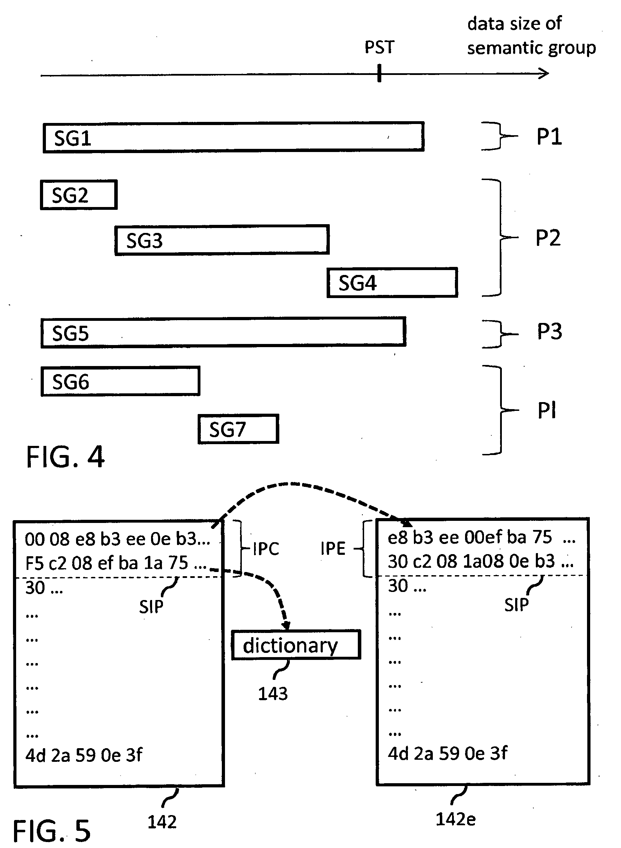

FIG. 4 illustrates partitioning with semantic groups SG1 to SG7 according to an embodiment of then invention. For further performance gains during later retrieval of the archived data it may be advantageous to not store all the archived data in a single data packet but rather to store multiple data packets, each with a technically manageable amount of data. In one embodiment, the archiving component may determine the plurality of partitions P1 to P3 by using a predefined partition size threshold PST. The threshold PST can indicate a minimum size of the compressed binary objects corresponding to the compressed partitions (cf. FIG. 2: 142-1, 142-2, etc.). Such a minimum size can ensure an optimal compression ratio of up to 95%., but also makes sure that data packages are not too big to be processed in the memory portion used for running the archiving component 140. In this embodiment, a particular partition P1, P2, P3 is determined when the size of the uncompressed to-be-archived data for this particular partition exceeds the predefined partition size threshold PST.

In the example, the data volume of a first semantic group SG1 exceeds the threshold PST. Therefore, the system immediately creates the first partition P1 with the compressed data corresponding to the original data records included in SG1. The data volumes of the second, third and fourth semantic groups SG2, SG3 and SG4 are each smaller than the threshold value PST. Therefore, the archiving component cumulates the data records of those semantic groups until the aggregate data volume of the cumulated semantic groups exceeds the threshold PST. In the example this is the case after the fourth semantic group has been added. As a result, the archiving component generates the second partition P2 including the compressed data corresponding to the original data records included in the semantic groups SG2, SG3 and SG4. In case an index is generated for this partition, the index indicates the value ranges of the corresponding content based partitioning criteria covering all data records of the three semantic groups compressed into the second partition P2. The data volume of the fifth semantic group SG5 is again exceeding the threshold PST. Therefore, the system creates a corresponding third partition P3 with the compressed data of the data records of SG5. In general, as long as the data volume of an identified semantic group is smaller than or equals the partition size threshold PST the archiving component does not create a partition but proceeds with the next semantic group which is then added to the current semantic group. When the aggregate data amount of the semantic groups is larger than the partition size threshold PST a new partition will be formed.

With real data, there will be typically a remainder of to-be-archived data records with a data volume below the partition size threshold PST. In the example; the aggregate data volume of the last semantic groups SG6 and SG7 grouping the remaining to-be archived data records is still below the threshold PST. For this remainder the compression ratio may not be assured, but it may be negligible when compared to all archived data. Still 95% compression ratio can be achieved on average. That is, the original data records of the last semantic groups SG6, SG7 are compressed into the compressed partition PL despite their size being less than the threshold PST. A typical size for partition size threshold PST for uncompressed data is in the range between 50 MB and 200 MB. Within this range a good compression ratio can be achieved and the memory consumption is acceptable for today's hardware. With more powerful future hardware a person skill in the art can adjust the range accordingly.

In one embodiment, the archiving component 140 may be implemented as a nearline storage solution (NLS) which integrates with SAP HANA as the in-memory DB 111 (cf. FIG. 1). A person skilled in SAP database technology and the SAP BW solution is familiar with the SAP specific terms and acronyms used in the context of this embodiment. In this embodiment, data may be written to the archiving component using the SAP Data Archiving Process (DAP). The process is created on the SAP side with connection to the archiving component. An archiving request generates a NLS request and the to-be-archived data is packaged into data packets (partitions). For example, when data packets reach the level of, for example,100 MB, they are packed and compressed into the archive. The archived data may be stored in a cluster table on a local or a remote system. To achieve good performance of access times, the archiving component can optimize the data packets so that the archived data is packaged in an optimized way for the future accesses.

Smart data segmentation (SDS) as described in the following may be used for analysing access types and access frequency for the future archived data so that the data is archived for optimizing the access of later read procedures. An aspect of SDS is to determine semantic groups automatically, in the most optimal way. In general, in an SAP BW system, which may serve as an application built on top of the persistent DB for archiving the data, reading access types for DSO objects can be distinguished from reading access types for InfoCubes. InfoCubes may be implemented through database tables defining multidimensional data stores. Since the two kinds of accesses are different for DSO objects and InfoCubes, smart data segmentation can optimize each access type separately.

Reading access types for DSO objects:

1) DTP Full load - Full scan, optionally with some selection - most of the data is advantageously read without aggregation (1:1)

2) Lookup with FOR ALL ENTRIES statement - primary key is mainly used as lookup characteristics (criterion for later read access)

3) Activation with NLS writer (update possibility into archived partitions) - to be updated data is to be read from NLS (access via primary key)

Access type 1) DTP Full load is using the full scan method; therefore any kind of segmentation does not have a performance impact. Only for access types 2) and 3) the key part of DSO is important since the access is done based on characteristics from the key fields. Therefore the segmentation can be done based on the primary key with the following logic:

• All primary key fields are used in a semantic group of a DAP process in the same order as defined in the original DSO object

• A Value of 100 MB may be used for the data packet size

For access types 2) and 3), the reading type is optimal, because the data in the archive is sorted and packaged based on the primary key. When the Cluster index reading method is used, there is a high probability that only data packets with relevant data will be read. The Cluster index reading method is a concept for fast access times for highly compressed data. Only packages are read where it is known that the data which needs to be read is stored. This may be done by means of a cluster index, which stores information about what kind of data is stored in a cluster. However the index may have limited accuracy to keep the size of index low. The accuracy is dependent on the number of distinct values in one data packet, as well as on variability. For example, if one data packet includes 100000 records and contains data for the years 2002, 2005 and 2009, then the created index indicates that data between 2002 and 2009 is in the data packet. Therefore if data from 2008 is to be read, the data packet is decompressed and scanned even though it may not contain any relevant data. This behavior can be reduced to a minimum using the smart data segmentation algorithm for optimized data sorting disclosed in the following. If data in packets is sorted, less often data packets are read, which may not include relevant data. In the writing process, information about data in each data packet can be stored in cluster indexes. This information indicates to the archiving component which data is in a cluster and which packages should be read. If a data retrieval request is received, the request is compared to the cluster information and only relevant clusters are read.

Reading access types for InfoCubes:

a) Query access with high level of aggregation (e.g., 500000 lines read, aggregated into 50 lines displayed)

b) Query access with high level of filtering (e.g., 500000 lines scanned, 50 lines relevant, almost no aggregation)

c) Combinations of a) and b)

Achieving optimal sorting arid segmentation for InfoCubes is more difficult than for DSO objects. The reason is that there is no primary key for InfoCubes and the access types for InfoCubes can vary depending on query definitions and input parameters. There are two ways of accessing the data - filtering vs. aggregation - associated with two embodiments for optimal access. The first embodiment is optimal data segmentation for fast filtering. The second embodiment is creation of aggregates for queries which need aggregates access. The high level logic for determining optimal segmentation for data in InfoCubes (also referred to as Cubes) is described in the following:

Assuming cube $C_1$ has queries $Q_1$ to $Qn,$ then the following steps are performed:

1. Get the number of rows of $C_1$

2. Split queries between queries with high aggregation ratio and queries with high filtering ratio

3. Create aggregates

4. Get cardinality of characteristics, which were used in filtering

5. Compute semantic groups based on given inputs

6. Validate semantic groups

7. If validation fails, extend semantic groups and go to step 6 again

**Step 1. - Number of rows**

This step merely makes a select count on a given InfoCube for the F and E tables of the InfoCube. The output is a sum of the number of rows from the F and E tables.

**Step 2. - Query analysis**

Prerequisites:

•    Query statistics are available

•    Detailed query statistics are available using an appropriate statistics collector. The statistics collector can be implemented by a software program to measure access statistics with regards to particular database tables and with regards to the importance or relevance of respective selection criteria (filtering characteristics). For example, the statistics collector can track how often a product sales table is accessed by using the selection/filtering characteristics fiscal year and product group vs. using the selection/filtering characteristics fiscal year and country or any other filtering combination.

For each query $Qi$ an analysis is run to determine:

- Number of runs of the query

- Number of filterings per characteristic (i.e., number of accesses using the respective characteristics as a filtering criterion)

- Average read vs. displayed ratio (i.e., number of read data records vs. the number of displayed data records)

- List of characteristics (selection/filtering criteria) used in the query

The analysis may be done for a short period of time (e.g., last month) or for a longer period. This can be setup by corresponding parameters. The number of runs for query runtimes can be read from the respective query statistics.

The number of filterings per characteristics can be determined by the statistics collector. As a result, the system knows how often each characteristic was used as a filter (e.g., 0FISC_PER was used 25 times in past month in a filter for Query $Q_i$). Average read vs. displayed ratio can be read again from OLAP statistics. In SAP BW it is described as events 9010 and 9011. The aaverage read vs. displayed ratio can be computed by dividing the sum of read records by the sum of displayed records. Furthermore, the statistics collector may return also the characteristics which were already used in queries (i.e., characteristics used as filtering criteria).

Based on the average read vs. displayed ratio queries can be split into queries having a high aggregation ratio and queries having a low aggregation ratio. For example, the split may be done per default by using a split threshold value. For example, if the split threshold value is defined as 1000 it means that on average a query needs at least 1000 records to be aggregated into one displayed record. In this case, an aggregate may be used for optimal access times for the query. If the query needs less than 1000 records then rather optimal segmentation may be used as solution.

**Step 3. - create aggregates**

For each query $Q_i$, which was identified as relevant for aggregation in step 2., aggregates can be created based on a list of characteristics used in a query from step 1. If the query already exists with the same characteristics, no aggregate may be created. As a consequence, typically for many queries an aggregate can be created. Even though there can be many aggregates, they are typically at least 1000 times smaller in size than the original to-be-archived data. For example, even huge table objects with 1 000 000 000 or more records can end up with aggregates which have less than 1 000 000 records.

**Step 4. - cardinality of characteristics**

In this step, cardinality of all characteristics used in filters is measured. Cardinality corresponds to the number of data records with particular characteristics. The measurement may be done directly in dimension tables of SAP BW. For objects with line-item dimension, data may be read directly from the InfoCube.

**Step 5. - compute semantic groups**

This steps computes which characteristics will be used for forming a semantic group as well as their respective order. The computation is based on queries and filtering characteristics which are identified in step 2. as relevant for segmentation. From those results the characteristics used as filtering criteria can be obtained together with the respective number of filtering (query) accesses and the respective cardinality. A sorting weight may be computed for each characteristic by dividing the usage (i.e., number of filtering accesses with said characteristic) by $\log_{100}$(cardinality). The outcome reflects the following concepts:

- Characteristics often used in filters are put into semantic groups

- Characteristics with higher cardinality have a lower sorting weight. The reason is that if a characteristic with very high cardinality is used all following characteristics have no significant sorting impact. For example, if the document number is the primary segmentation criterion and if there is a huge number of different documents numbers, then it makes no difference whether the company code follows as a second segmentation criterion or not because the segmentation will be already determined by the document number charactersitics.

The following table shows an example of the result of the statistics collector for four characteristics (Company Code, Calmonth, Country, Document number). Because the cardinality of Document number is so high vs. the other characteristics and at the same time Document number is used not substantially more often as filter than other characteristics it is likely not to be a meaningful segmentation criterion. This is taken into account by the computation of the sorting weight which normalizes the number of uses as filtering criterion by the cardinality (e.g., $\text{Log}_{100}(\text{cardinality})$).

| Characteristic | Cardinality | Usage in filters (filtering accesses) | Log100 from cardinality | Sorting weight |
|---|---|---|---|---|
| Company code | 100 | 250 | 1 | 250 |
| Document number | 1000000 | 200 | 3 | 66,6 |
| Calmonth | 100 | 150 | 1 | 150 |
| Country | 10 | 50 | 0,5 | 100 |

As a result, in the above example, the characteristics can be sorted based on the computed sorting weight in the following order: Company Code, Calmonth, Country, Document number. The sorted characteristics may now indicate their relevance for forming respective semantic groups. It is to be noted that the cardinality of calendar months (Calmonth) can exceed twelve. For example, in the case of having data for eight years in the system, the respective cardinality would be computed as 12*8=96.

However not all characteristics may be appropriate to form semantic groups. It may be advantageous to stop at a certain point, because more characteristics in a semantic group may not necessarily further segment the data as shown above with the example of the document number. The following logic may be used:

i. Sort characteristics $\mathbf{Ch_1}$ ... $\mathbf{Ch_n}$ by sorting weight ($\mathbf{Ch_1}$ is the characteristic with the highest weight), with cardinality $\mathbf{C_1...C_n}$

ii. Set total cardinality $\mathbf{C = 1}$

iii. Loop through $\mathbf{C_i}$

iv. Compute $\mathbf{C = C*C_i}$

v. If InfoCube size/ $\mathbf{C}$ > critical threshold continue else exit

vi. Add $\mathbf{Ch_i}$ to semantic group

By using the above algorithm the first x characteristics are used for forming a semantic group, until the product of all cardinalities does not cross some critical threshold (e.g., 1000). This example allows having average sizes of semantic groups with less than 100 000 records. If the groups are small they can be added together until they reach 100 MB.

**Step 6. - validate semantic group**

This step evaluates whether the semantic groups which are formed according to the previously determined criteria are reasonable balanced in size. For example, for the proposed semantic groups the system can determine the size of the biggest semantic group for the last month or another significant period. From the E and F tables of the respective InfoCube the system can get the size of each semantic group and determine the largest group. If the size of largest semantic group is above a certain threshold value (e.g., larger than 300 000 records) the validation fails.

**Step 7. - corrective measures**

If step 6 fails, the next characteristic based on the sorting weight may be added to the semantic group and the validation step 6. is repeated. Steps 6. and 7. may be repeated until either the validation is successful or the list of characteristics which can be added is empty.

FIG. 5 illustrates encryption of compressed data 142 according to an embodiment of the invention. This embodiment improves data security with regards to the compressed data 142. High compression rates can be achieved with dictionary based compression algorithms. As disclosed above, algorithms such as the LZH - Liv Zempel algorithm with Huffman coding or the Lem pel-Ziv-Welch-Algorithm or any derivative of such algorithms may be used to achieve data compression ratios of up to 95%. However, dictionary based compression algorithms allow easy decompression of the compressed data when the compression algorithm is known. One characteristics of dictionary based compression/decompression is that the compression dictionary 143 is built on the fly during the compression and there is no need to separately provide the dictionary for the decompression. Instead, the decompression algorithm is building the dictionary again on the fly. Therefore, anybody who has knowledge about the compression method which was used for compressing the to-be-archived data records can easily decompress the compressed partitions to regain the original data.

Therefore, it is desirable to further improve the archiving component in making the compressed partitions 142 secure against possible attacks through unauthorized access to the original data records. Therefore, after the compression of the to-be-archived data records into the respective compressed partitions the data archiving component only encrypts an initial portion IPC of the compressed data records 142. This initial portion IPC of the compressed data records was used for constructing the initial portion of the dictionary 143 during the data compression. As known by a person skilled in the art, one characteristics of dictionary based compression is that the biggest part of the dictionary 143 is built at the beginning of the compression because in the beginning the most new symbols for the dictionary are created. Towards the end of the compression most symbols are already in the dictionary 143 and only from time to time a new one gets added. As a consequence, by encrypting only the initial portion IPC of the compressed data records 142 (i.e, the portion that was created first by the compressor) the biggest part of the dictionary 143 which is built during the decompression of the data based on the encrypted initial portion IPE is without any value for the decompression of the remaining larger part of the unencrypted compressed data 142e. In other words, by encrypting only a minor portion IPC of the compressed data 142 the dictionary reconstruction during the decompression is totally messed up because the main part of the reconstructed dictionary is built during the initial phase of the decompression based on the encrypted compressed data IPE. However, this part of the reconstructed dictionary is totally useless for decompressing the unencrypted compressed data 142e. That is, the reconstructed dictionary during data decompression is very different from the original dictionary 143 used for the data compression.

In the example of SAP HANA or SAP Netweaver system compressed data is stored in so-called cluster tables. The first 12 bytes correspond to SP head information. Bytes 12-19 correspond to the compression header information and the bytes 20 to the end of the cluster table include the compressed partition. The critical part IPC for the Huffman coding and the LZ algorithm is approximately the first 1000 bytes of data records. For other compression algorithms this critical part may be different in size SIP. Without this critical part it becomes substantially impossible to decompress the data in a meaningful way. The size SIP of the initial portion is a variable control parameter of the archiving system component.

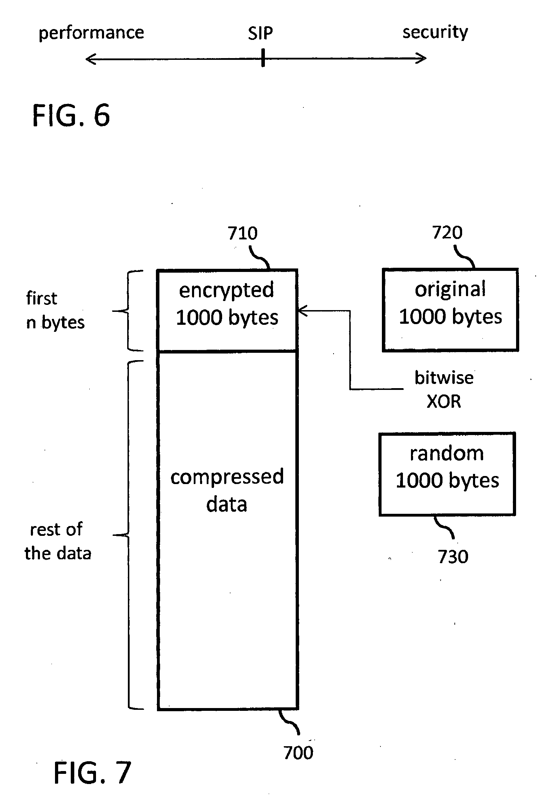

FIG. 6 illustrates security tuning of the archiving component by varying the size SIP parameter for the initial portion IPC. There is a trade-off between the performance of the archiving system and the size of the archived data on the one hand and the security of the data on the other hand. By using the size SIP of the initial portion IPC as a variable control parameter of the archiving system component, the user can tune the archiving system in this respect according to user preferences. For example, less sensitive data can be encrypted by using a smaller initial portion IPC for encryption than highly sensitive data. In turn, the performance and compression ratio is better for the less sensitive data than for the highly sensitive data. A further technical effect based on a relatively small encrypted initial portion IPE that high data security can be established while still maintaining a high degree of data compression. In case the data volume of compressed data is approximately doubled through the encryption the IPE size would reach approximately 2000 bytes in the above example. Assuming an average size of a compressed partition of 100 MB, the overhead caused by the encryption would correspond to only 0.001% of the total compressed data volume. Even when moving the size SIP towards an even higher degree of security, the overall compression ratio between the original to-be-archived data and the encrypted compressed data is hardly affected.

FIG. 7 illustrates that the encryption algorithm can be based on maximum safety XOR encryption and the idea to encrypt only the initial portion 720 (e.g., first 1000 bytes) of the original compressed data. It leverages the fact that data which is compressed is already encrypted, but getting the key, that is, the dictionary, is simple. HEXOR encrypts the initial portion720 were most of the vocabulary of the dictionary is created to make the decryption more difficult. The key for encryption can be a number of random bytes wherein the number of random bytes corresponds to the number of original bytes 720 (initial portion). In the example, the number of random bytes and the number of original bytes is assumed to be 1000 bytes. The first 1000 bytes of the original compressed data 720 is bit wise XORed with the randomly generated key 730 resulting in the encrypted bits 710. The rest of the compressed data 700 remains unencrypted. Bitwise XOR works like for example:

$$1 \; XOR \; 0 = 1$$

$$1 \; XOR \; 1 = 0$$

$$0 \text{ XOR } 1 = 1$$

$$0 \text{ XOR } 0 = 0$$

The first bits are coming from the original data 720, the second bits come from the generated key 730. Since the bits from the key 730 are randomly generated, also the output has random structure. The inverse function to XOR is XOR.

Thus, reading from right to left results in the same data as the original example:

$$1 = 0 \text{ XOR } 1$$

$$1 = 1 \text{ XOR } 0$$

$$0 = 1 \text{ XOR } 1$$

$$0 = 0 \text{ XOR } 0$$

Therefore, the decryption works in a similar way.

It is impossible to determine the original bits without knowing the key, because in every case any possible source bit combination has the same probability as the real compressed data. In other words, having the encrypted data without the key does not bring any additional information - it is random data.

The following steps describe an example embodiment of the encryption algorithm:

1) Compressing the data using LZH

2) Extracting first 1000 bytes of compressed data (the header)

3) Generating random key with 1000 bytes (8000 bits) (the key)

4) XORing the header with key bitwise (the encrypted header)

5) Replacing the header with the encrypted header

6) Storing the key at a safe place (preferably not together with the encrypted header)

Advantageously, the key 730 is stored at the safe location which is different from the storage location of the original bytes 720. A solution for file storage is to store the data in the original database. In the example, the size required for storing the key 730 is 1000 bytes per data package. Since the size of a typical data package typically is more than 1 000 000 bytes the additional space requirement is likely to be less than 0,1% of the entire space requirement.

Data decryption is the inverse process of the data encryption. The encrypted 1000 bytes 710 are XORed bitwise with the key 730, and the resulting set is then used as the header part of the original string 720.

The following steps describe an example embodiment of the decryption algorithm:

1) Read the compressed data with encrypted header

2) Read the key

3) XOR the encrypted header with the key - > result is the original header

4) Replace the encrypted header with the original header

5) Decompress the data using LZH

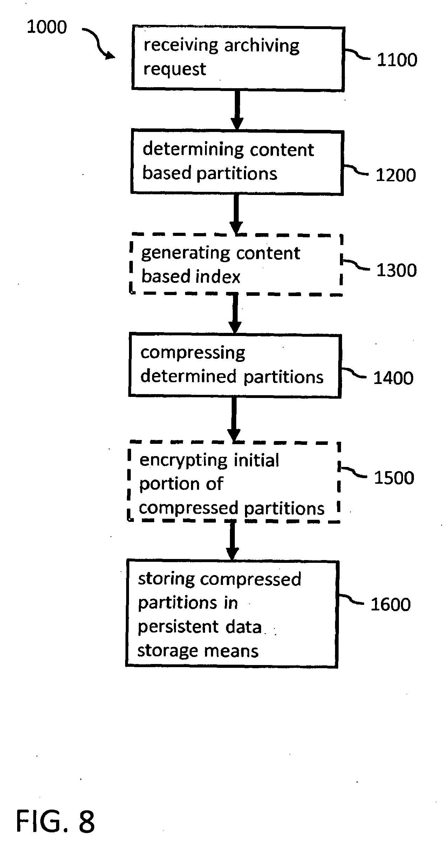

FIG. 8 is a simplified flowchart of a computer implemented method 1000 according to an embodiment of the invention. Optional steps of the method 1000 are illustrated with dashed frames. The computer implemented method 1000 can be executed by the above disclosed archiving when instructions of a respective computer program are loaded into the archiving system and executed by one or more processors of the archiving system.

The method includes receiving 1100 a request for archiving to-be-archived data records stored in a volatile in memory database. The volatile in memory database can store application data which need to be archived for various reasons (e.g., legal requirement, business reporting, long term data analysis, etc.) In response to the request, the archiving system accesses 1200 the to-be-archived data records in the volatile in-memory database. Various modes for accessing and reading the to-be-archived data have been described earlier. The system then determines 1200 a plurality of partitions for the to-be-archived data records according to at least one content based partitioning criterion which relates to at least one content portion of the to-be-archived data records, the use of content based partitioning criteria allows forming partitions which are optimized for later data retrieval. The retrieval behavior of archiving users typically is content based (e.g., data by year, product group, etc.). That is, content based partitioning criteria can be used to sort the data according to such user preferences and create data packages which can be quickly retrieved once archived because the data are already grouped in an appropriate way for later retrieval. The system then compresses the to-be-archived data records for each determined partition. It is one goal for archiving systems to minimize memory consumption caused by the archived data. Therefore, appropriate data compression algorithms as disclosed earlier can reduce the memory consumption by more than 90 %. Then, the system stores1600 the compressed determined partitions in persistent data storage means. The storing step 1600 finally generates the archived data which are now stored in a manner which is optimized for later high performance retrieval and low memory consumption.

Compressed data typically is binary data which is difficult to store in a conventional database. Therefore, storing the compressed partitions in the form of binary objects can be advantageously performed in a file system rather than in a (relational) database. For retrieving the binary objects from the file system references to each binary object (compressed partition) may be stored in a respective persistent database structure.

In one embodiment, the system can generate 1300 an index for each compressed determined partition in the persistent data storage means. The index indicates a range for the at least one content based partitioning criterion wherein the range is representative for the compressed data records included in each respective stored partition. As explained earlier, such a content based index further improves system performance during later data retrieval of the archived data.

In one embodiment, compressing 1400 uses a dictionary based compression algorithm to compress the to-be-archived data records and the system encrypts 1500 only an initial portion of the compressed data records. The initial portion of the compressed data records is used for the initial portion of the dictionary. As explained earlier, by encrypting only an initial portion of the compressed data which corresponds only to a minor fraction of the entire compressed dataset the system becomes highly secure against any attempt of stealing or misusing the archived data while at the same time the compression ratio of the archived data and the performance for accessing the archived data is hardly affected.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1. A computer system (100) for archiving digital data, comprising:

   a database management system (110) coupled with a volatile in-memory database (111) for storing digital data;
   an interface component (130) configured to receive a request for archiving to-be-archived data records (121) stored in the volatile in-memory database (111); and
   a data archiving component (140) configured

      in response to the request, to access the to-be-archived data records (121) in the volatile in-memory database (111),
      to determine a plurality of partitions (141) for the to-be-archived data records (121) according to at least one content based partitioning criterion which relates to at least one content portion (121-1) of the to-be-archived data records (121),

   **characterized in that**
   the data archiving component (140) is further configured

      to compress the to-be-archived data records (121) for each determined partition (141-1, 141-2, 141-3, 141-4) into a binary object,
      to store the compressed determined partitions (142) in persistent data storage means (112), and
      to generate an index (I1 to I4) for each compressed determined partition (142-1 to 142-4) in the persistent data storage means, the index (I1 to I4) indicating a range for the at least one content based partitioning criterion, the range being representative for the compressed data records included in each respective stored partition.

2. The computer system of claim 1, wherein the persistent data storage means (112) is part of the database management system (110).

3. The computer system of claim 1 or 2, wherein the persistent data storage means (112) further comprises:

   a file system configured to store the compressed determined partitions (142) as binary objects; and
   a database structure for storing a reference to each compressed determined partition.

4. The computer system of any of the previous claims, wherein the system further has a statistics collector component configured to measure query access statistics with regards to particular database tables and with regards to the relevance of respective selection criteria, the system further configured to compute the at least one content based partitioning criterion, the computation based on queries and selection criteria identified as relevant for partitioning.

5. The computer system of any of the previous claims, wherein the archiving component is further configured to determine the plurality of partitions (P1, P2, P3, PI) by using a predefined partition size threshold (PST) wherein a particular partition (P1, P2, P3) is determined when the size of the particular partition (P1, P2, P3) exceeds the predefined partition size threshold (PST).

6. The computer system of claim 5, wherein the archiving component is further configured to determine a last partition (PI) which is smaller than the predefined partition size threshold (PST).

7. The computer system of any of the previous claims, wherein the data archiving component (140) uses a dictionary based compression algorithm to compress the to-be-archived data records (121) and wherein the data archiving component is further configured to only encrypt an initial portion (IPC) of the compressed data records (142), the initial portion (IPC) of the compressed data records (142) being used for the initial portion of the dictionary (143).

8. The computer system of claim 7, wherein the size of the initial portion (SIP) is a variable control parameter of the archiving system component.

9. The computer system of claims 7 or 8, wherein the data archiving component uses a maximum safety XOR encryption algorithm to encrypt the initial portion (IPC) of the compressed data records (142).

10. The computer system of any of the previous claims, wherein the data archiving component is further configured

   to receive a read request for original data archived in the persistent data storage means wherein the read request specifies at least one particular content based partitioning criterion,
   to retrieve from the persistent data storage means a specific compressed partition matching the at least one particular content based partitioning criterion,
   to decompress the retrieved compressed partition resulting in the requested original data, and
   to provide the original data to the volatile in-memory database.

11. A computer implemented method (1000) for, comprising:

   receiving (1100) a request for archiving to-be-archived data records (121) stored in a volatile in-memory database (111);
   in response to the request, accessing (1200) the to-be-archived data records (121) in the volatile in-memory database (111);
   determining (1200) a plurality of partitions (141) for the to-be-archived data records (121) according to at least one content based partitioning criterion which relates to at least one content portion (121-1) of the to-be-archived data records (121);
   **characterized in that** the method further comprises:

      compressing (1400) the to-be-archived data records (121) for each determined partition (141-1, 141-2, 141-3, 141-4) into a binary object;
      storing (1600) the compressed determined partitions (142) in persistent data storage means (112); and
      generating (1300) an index (I1 to 14) for each compressed determined partition (142-1 to 142-4) in the persistent data storage means, the index (I1 to 14) indicating a range for the at least one content based partitioning criterion, the range being representative for the compressed data records included in each respective stored partition.

12. The computer implemented method (1000) of claim 11, wherein storing (1400) comprises:

   storing the compressed determined partitions (142) as binary objects in a file system; and
   storing a reference to each compressed determined partition in a database structure.

13. The computer implemented method (1000) of claim 11 or 12, further comprising:

   measuring, by a statistics collector component, query access statistics with regards to particular database tables and with regards to the relevance of respective selection criteria, and
   computing the at least one content based partitioning criterion, the computation based on queries and selection criteria identified as relevant for partitioning.

14. The computer implemented method (1000) of any one of the claims 11 to 13, wherein compressing (1400) uses a dictionary based compression algorithm to compress the to-be-archived data records (121), the method further comprising:

encrypting (1500) only an initial portion (IPC) of the compressed data records (142),
the initial portion (IPC) of the compressed data records (142) being used for the initial portion of the dictionary (143).

15. A computer program product that when loaded into a memory of a computing device and executed by at least one processor of the computing device executes the steps of the computer implemented method according to any one of the claims 11 to 14.

**Patentansprüche**

1. Computersystem (100) zum Archivieren von digitalen Daten, umfassend:

   ein Datenbankmanagementsystem (110), das mit einer flüchtigen speicherinternen Datenbank (111) gekoppelt ist, zum Speichern von digitalen Daten;
   eine Schnittstellenkomponente (130), die dafür ausgelegt ist, eine Anforderung zum Archivieren von zu archivierenden Datensätzen (121), die in der flüchtigen speicherinternen Datenbank (111) gespeichert sind, zu empfangen; und
   eine Datenarchivierungskomponente (140), die dafür ausgelegt ist

   als Reaktion auf die Anforderung auf die zu archivierenden Datensätze (121) in der flüchtigen speicherinternen Datenbank (111) zuzugreifen,
   mehrere Partitionen (141) für die zu archivierenden Datensätze (121) gemäß wenigstens einem inhaltsbasierten Partitionierungskriterium zu bestimmen, das sich auf wenigstens einen Inhaltsteil (121-1) der zu archivierenden Datensätze (121) bezieht,
   **dadurch gekennzeichnet, dass**
   die Datenarchivierungskomponente (140) ferner dafür ausgelegt ist
   die zu archivierenden Datensätze (121) für jede bestimmte Partition (141-1, 141-2, 141-3, 141-4) zu einem binären Objekt zu komprimieren,
   die komprimierten bestimmten Partitionen (142) in nichtflüchtigen Datenspeichermitteln (112) zu speichern und einen Index (I1 bis 14) für jede komprimierte bestimmte Partition (142-1 bis 142-4) in dem nichtflüchtigen Datenspeichermittel zu erzeugen, wobei der Index (I1 bis 14) einen Bereich für das wenigstens eine inhaltsbasierte Partitionierungskriterium angibt, wobei der Bereich die komprimierten Datensätze repräsentiert, die in jeder jeweiligen gespeicherten Partition enthalten sind.

2. Computersystem nach Anspruch 1, wobei das nichtflüchtige Datenspeichermittel (112) Teil des Datenbankmanagementsystems (110) ist.

3. Computersystem nach Anspruch 1 oder 2, wobei das nichtflüchtige Datenspeichermittel (112) ferner umfasst:

   ein Dateisystem, das dafür ausgelegt ist, die komprimierten bestimmten Partitionen (142) als binäre Objekte zu speichern; und
   eine Datenbankstruktur zum Speichern eines Verweises auf jede komprimierte bestimmte Partition.

4. Computersystem nach einem der vorstehenden Ansprüche, wobei das System ferner eine Statistikerfassungskomponente aufweist, die dafür ausgelegt ist, Abfragezugriffsstatistiken in Bezug auf bestimmte Datenbanktabellen sowie in Bezug auf die Relevanz der jeweiligen Auswahlkriterien zu messen, wobei das System ferner dafür ausgelegt ist, das wenigstens eine inhaltsbasierte Partitionierungskriterium zu berechnen, wobei die Berechnung auf Abfragen und Auswahlkriterien basiert, die als für die Partitionierung relevant identifiziert wurden.

5. Computersystem nach einem der vorstehenden Ansprüche, wobei die Archivierungskomponente ferner dafür ausgelegt ist, die mehreren Partitionen (P1, P2, P3, PI) anhand eines vorbestimmten Partitionsgröße-Schwellwerts (Partition Size Threshold, PST) zu bestimmen, wobei eine bestimmte Partition (P1, P2, P3) bestimmt wird, wenn die Größe der betreffenden Partition (P1, P2, P3) den vorbestimmten Partitionsgröße-Schwellwert (PST) überschreitet.

6. Computersystem nach Anspruch 5, wobei die Archivierungskomponente ferner dafür ausgelegt ist, eine letzte Partition (PI) zu bestimmen, die kleiner als der vorbestimmte Partitionsgröße-Schwellwert (PST) ist.

**7.** Computersystem nach einem der vorstehenden Ansprüche, wobei die Datenarchivierungskomponente (140) einen wörterbuchbasierten Komprimierungsalgorithmus verwendet, um die zu archivierenden Datensätze (121) zu komprimieren, und wobei die Datenarchivierungskomponente ferner dafür ausgelegt ist, nur einen Anfangsteil (Initial Portion, IPC) der komprimierten Datensätze (142) zu verschlüsseln, wobei der Anfangsteil (IPC) der komprimierten Datensätze (142) für den Anfangsteil des Wörterbuchs (143) verwendet wird.

**8.** Computersystem nach Anspruch 7, wobei die Größe des Anfangsteils (Size of the Initial Portion, SIP) ein variabler Steuerparameter der Archivierungssystemkomponente ist.

**9.** Computersystem nach Anspruch 7 oder 8, wobei die Datenarchivierungskomponente einen XOR-Verschlüsselungsalgorithmus für maximale Sicherheit verwendet, um den Anfangsteil (IPC) der komprimierten Datensätze (142) zu verschlüsseln.

**10.** Computersystem nach einem der vorstehenden Ansprüche, wobei die Datenarchivierungskomponente ferner dafür ausgelegt ist
eine Leseanforderung für in dem nichtflüchtigen Datenspeichermittel archivierte Originaldaten zu empfangen, wobei die Leseanforderung wenigstens ein bestimmtes inhaltsbasiertes Partitionierungskriterium angibt,
aus dem nichtflüchtigen Datenspeichermittel eine spezifische komprimierte Partition abzurufen, die dem wenigstens einen bestimmten inhaltsbasierten Partitionierungskriterium entspricht,
die abgerufene komprimierte Partition zu dekomprimieren, was die angeforderten Originaldaten ergibt, und
die Originaldaten an die flüchtige speicherinterne Datenbank bereitzustellen.

**11.** Computerimplementiertes Verfahren (1000), umfassend:

Empfangen (1100) einer Anforderung zum Archivieren von zu archivierenden Datensätzen (121), die in einer flüchtigen speicherinternen Datenbank (111) gespeichert sind;
als Reaktion auf die Anforderung, Zugreifen (1200) auf die zu archivierenden Datensätze (121) in der flüchtigen speicherinternen Datenbank (111);
Bestimmen (1200) mehrerer Partitionen (141) für die zu archivierenden Datensätze (121) gemäß wenigstens einem inhaltsbasierten Partitionierungskriterium, das sich auf wenigstens einen Inhaltsteil (121-1) der zu archivierenden Datensätze (121) bezieht;
**dadurch gekennzeichnet, dass** das Verfahren ferner umfasst:

Komprimieren (1400) der zu archivierenden Datensätze (121) für jede bestimmte Partition (141-1, 141-2, 141-3, 141-4) zu einem binären Objekt;
Speichern (1600) der komprimierten bestimmten Partitionen (142) in nichtflüchtigen Datenspeichermitteln (112); und
Erzeugen (1300) eines Index (I1 bis 14) für jede komprimierte bestimmte Partition (142-1 bis 142-4) in dem nichtflüchtigen Datenspeichermittel, wobei der Index (I1 bis 14) einen Bereich für das wenigstens eine inhaltsbasierte Partitionierungskriterium angibt, wobei der Bereich die komprimierten Datensätze repräsentiert, die in jeder jeweiligen gespeicherten Partition enthalten sind.

**12.** Computerimplementiertes Verfahren (1000) nach Anspruch 11, wobei das Speichern (1400) umfasst:

Speichern der komprimierten bestimmten Partitionen (142) als binäre Objekte in einem Dateisystem; und
Speichern eines Verweises auf jede komprimierte bestimmte Partition in einer Datenbankstruktur.

**13.** Computerimplementiertes Verfahren (1000) nach Anspruch 11 oder 12, ferner umfassend:

Messen, durch eine Statistikerfassungskomponente, von Abfragezugriffsstatistiken in Bezug auf bestimmte Datenbanktabellen sowie in Bezug auf die Relevanz der jeweiligen Auswahlkriterien, und
Berechnen des wenigstens einen inhaltsbasierten Partitionierungskriteriums, wobei die Berechnung auf Abfragen und Auswahlkriterien basiert, die als für die Partitionierung relevant identifiziert wurden.

**14.** Computerimplementiertes Verfahren (1000) nach einem der Ansprüche 11 bis 13, wobei das Komprimieren (1400) einen wörterbuchbasierten Komprimierungsalgorithmus verwendet, um die zu archivierenden Datensätze (121) zu komprimieren, und wobei das Verfahren ferner umfasst:

Verschlüsseln (1500) nur eines Anfangsteils (IPC) der komprimierten Datensätze (142), wobei der Anfangsteil (IPC) der komprimierten Datensätze (142) für den Anfangsteil des Wörterbuchs (143) verwendet wird.

15. Computerprogrammprodukt, das, wenn es in einen Speicher einer Datenverarbeitungsvorrichtung geladen und von wenigstens einem Prozessor der Datenverarbeitungsvorrichtung ausgeführt wird, die Schritte des computerimplementierten Verfahrens gemäß einem der Ansprüche 11 bis 14 ausführt.

**Revendications**

1. Système d'ordinateur (100) permettant d'archiver des données numériques, comprenant :

un système de gestion de base de données (110) couplé à une base de données mémoire volatile (111) permettant de stocker des données numériques ;
un composant d'interface (130) configuré pour recevoir une requête d'archivage d'enregistrements de données à archiver (121) stockés dans la base de données mémoire volatile (111) ; et
un composant d'archivage de données (140) configuré pour
en réponse à la requête, accéder aux enregistrements de données à archiver (121) dans la base de données mémoire volatile (111),
déterminer une pluralité de partitions (141) pour les enregistrements de données à archiver (121) selon au moins un critère de partitionnement basé sur un contenu qui concerne au moins une partie de contenu (121-1) des enregistrements de données à archiver (121),
**caractérisé en ce que**
le composant d'archivage de données (140) est configuré en outre pour
compresser les enregistrements de données à archiver (121) pour chaque partition déterminée (141-1, 141-2, 141-3, 141-4) en un objet binaire,
stocker les partitions déterminées compressées (142) dans des moyens de stockage persistant de données (112), et
générer un index (I1 à 14) pour chaque partition déterminée compressée (142-1 à 142-4) dans les moyens de stockage persistant de données, l'index (I1 à 14) indiquant une plage pour ledit critère de partitionnement basé sur un contenu, la plage étant représentative pour les enregistrements de données compressées inclus dans chaque partition stockée respective.

2. Système d'ordinateur selon la revendication 1, dans lequel le moyen de stockage persistant de données (112) fait partie du système de gestion de base de données (110).

3. Système d'ordinateur selon la revendication 1 ou 2, dans lequel les moyens de stockage persistant de données (112) comprennent en outre :

un système de fichier configuré pour stocker les partitions déterminées compressées (142) comme des objets binaires ; et
une structure de base de données destinée à stocker une référence à chaque partition déterminée compressée.

4. Système d'ordinateur selon l'une quelconque des revendications précédentes, dans lequel le système a en outre un composant collecteur de statistiques configuré pour mesurer des statistiques d'accès à des requêtes concernant des tables de base de données particulières et concernant la pertinence de critères de sélection respectifs, le système étant configuré en outre pour calculer ledit critère de partitionnement basé sur un contenu, le calcul étant basé sur des requêtes et des critères de sélection identifiés comme appropriés pour un partitionnement.

5. Système d'ordinateur selon l'une quelconque des revendications précédentes, dans lequel le composant d'archivage est configuré en outre pour déterminer la pluralité de partitions (P1, P2, P3, PI) à l'aide d'un seuil de taille de partition (PST) prédéfini, une partition particulière (P1, P2, P3) étant déterminée lorsque la taille de la partition particulière (P1, P2, P3) excède le seuil de taille de partition (PST) prédéfini.

6. Système d'ordinateur selon la revendication 5, dans lequel le composant d'archivage est configuré en outre pour déterminer une dernière partition (PI) qui est inférieure au seuil de taille de partition (PST) prédéfini.

7. Système d'ordinateur selon l'une quelconque des revendications précédentes, dans lequel le composant d'archivage de données (140) utilise un algorithme de compression basé dictionnaire pour compresser les enregistrements de données à archiver (121) et le composant d'archivage de données étant configuré en outre pour crypter uniquement une partie initiale (IPC) des enregistrements de données compressées (142), la partie initiale (IPC) des enregistrements de données compressées (142) étant utilisée pour la partie initiale du dictionnaire (143).

8. Système d'ordinateur selon la revendication 7, dans lequel la taille de la partie initiale (SIP) est un paramètre de commande variable du composant de système d'archivage.

9. Système d'ordinateur selon les revendications 7 ou 8, dans lequel le composant d'archivage de données utilise un algorithme de cryptage XOR de sécurité maximale pour crypter la partie initiale (IPC) des enregistrements de données compressées (142).

10. Système d'ordinateur selon l'une quelconque des revendications précédentes, dans lequel le composant d'archivage de données est configuré en outre pour

recevoir une requête de lecture pour des données originales archivées dans les moyens de stockage persistant de données, la requête de lecture spécifiant au moins un critère particulier de partitionnement basé sur un contenu,
récupérer à partir des moyens de stockage persistant de données une partition compressée spécifique correspondant au dit critère particulier de partitionnement basé sur un contenu,
décompresser la partition compressée récupérée produisant les données originales demandées, et
fournir les données originales à la base de données mémoire volatile.

11. Procédé mis en oeuvre par ordinateur (1000), comprenant les étapes suivantes :

recevoir (1100) une requête d'archivage d'enregistrements de données à archiver (121) stockés dans une base de données mémoire volatile (111) ;
en réponse à la requête, accéder (1200) aux enregistrements de données à archiver (121) dans la base de données mémoire volatile (111) ;
déterminer (1200) une pluralité de partitions (141) pour les enregistrements de données à archiver (121) selon ledit critère de partitionnement basé sur un contenu qui concerne au moins une partie de contenu (121-1) des enregistrements de données à archiver (121) ;
**caractérisé en ce que** le procédé comprend en outre :

compresser (1400) les enregistrements de données à archiver (121) pour chaque partition déterminée (141-1, 141-2, 141-3, 141-4) en un objet binaire ;
stocker (1600) les partitions déterminées compressées (142) dans des moyens de stockage persistant de données (112) ; et
générer (1300) un index (I1 à 14) pour chaque partition déterminée compressée (142-1 à 142-4) dans les moyens de stockage persistant de données, l'index (I1 à 14) indiquant une plage pour ledit critère de partitionnement basé sur un contenu, la plage étant représentative pour les enregistrements de données compressées inclus dans chaque partition stockée respective.

12. Procédé mis en oeuvre par ordinateur (1000) selon la revendication 11, dans lequel l'étape de stockage (1400) comprend :

stocker les partitions déterminées compressées (142) comme des objets binaires dans un système de fichier ; et
stocker une référence à chaque partition déterminée compressée dans une structure de base de données.

13. Procédé mis en oeuvre par ordinateur (1000) selon la revendication 11 ou 12, comprenant en outre les étapes suivantes :

mesurer, par un composant collecteur de statistiques, des statistiques d'accès à des requêtes concernant des tables de base de données particulières et concernant la pertinence de critères de sélection respectifs, et calculer ledit critère de partitionnement basé sur un contenu, le calcul étant basé sur des requêtes et des critères de sélection identifiés comme appropriés pour un partitionnement.

14. Procédé mis en oeuvre par ordinateur (1000) selon l'une quelconque des revendications 11 à 13, dans lequel l'étape de compression (1400) utilise un algorithme de compression basé dictionnaire pour compresser les enregistrements de données à archiver (121), le procédé comprenant en outre :

crytper (1500) uniquement une partie initiale (IPC) des enregistrements de données compressées (142), la partie initiale (IPC) des enregistrements de données compressées (142) étant utilisée pour la partie initiale du dictionnaire (143).

15. Produit programme d'ordinateur qui, lorsqu'il est chargé dans une mémoire d'un dispositif informatique et exécuté par au moins un processeur du dispositif informatique, exécute les étapes du procédé mis en oeuvre par ordinateur selon l'une quelconque des revendications 11 à 14.

FIG. 1

121-1   121

I1
I2
I3
I4

141
141-1
141-2
141-3
141-4

I1
I2
I3
I4

142
142-1
142-2
142-3
142-4

FIG. 2

| year | company code | product familiy | product | actual sales | actual cost | 121 |
|------|--------------|-----------------|---------|--------------|-------------|-----|
| 2012 | 1001 | 34 | A | 1012 | 758 | |
| 2012 | 1001 | 34 | B | 3003 | 2209 | |
| 2013 | 1001 | 35 | C | 2409 | 2029 | |
| 2013 | 1002 | 35 | C | 6754 | 5893 | |

121-1

I1: 2012/1001

I2: 2013/FROM 1001 TO 1002

FIG. 3

data size of
semantic group

PST

SG1 } P1

SG2
SG3 } P2
SG4

SG5 } P3

SG6
} PI
SG7

## FIG. 4

00 08 e8 b3 ee 0e b3...
F5 c2 08 ef ba 1a 75 ...
30 ...
...
...
...
...
...
...
4d 2a 59 0e 3f

} IPC

SIP

IPE {

e8 b3 ee 00ef ba 75 ...
30 c2 08 1a08 0e b3 ...
30 ...
...
...
...
...
...
4d 2a 59 0e 3f

SIP

dictionary

143

142

142e

## FIG. 5

performance                    SIP                    security

$$\longleftarrow \quad | \quad \longrightarrow$$

# FIG. 6

710                                        720

| first<br>n bytes | encrypted<br>1000 bytes | ← | original<br>1000 bytes |

bitwise
XOR

| random<br>1000 bytes |

730

| rest of<br>the data | compressed<br>data |

700

# FIG. 7

1000

receiving archiving
request — 1100

determining content
based partitions — 1200

generating content
based index — 1300

compressing
determined partitions — 1400

encrypting initial
portion of
compressed partitions — 1500

storing compressed
partitions in
persistent data
storage means — 1600

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140095441 A